# EUROPÄISCHE PATENTANMELDUNG

(11) **EP 1 074 414 A2**
(43) Veröffentlichungstag der Anmeldung: **07.02.2001**
(21) Anmeldenummer: 00116689.1
(22) Anmeldetag: 02.08.2000
(51) Int. Cl.: B60J 7/057

(54) **Steuervorrichtung für einen Elektromotor für ein verstellbares Fahrzeugteil**

(30) Priorität: 06.08.1999 DE 19937222
(71) Anmelder: Webasto Vehicle Systems International GmbH, 82131 Stockdorf (DE)
(72) Erfinder: Pohl, Peter, 82349 Pentenried (DE)
(74) Vertreter: Konnerth, Dieter Hans

(57) **Zusammenfassung**

Die Erfindung betrifft eine Steuervorrichtung für einen Elektromotor, der ein zwischen Bezugsstellungen verstellbares Fahrzeugteil antreibt, die mit einer Schalteinheit (12) zum Steuern des Motors versehen ist, wobei ein Schaltrad (14) vorgesehen ist, das beim Verstellen des Fahrzeugteils zwischen seinen Endstellungen über ein Exzentergetriebe (10) zu einer Drehbewegung von weniger als 360 Grad veranlaßt wird und die Schalteinheit in Abhängigkeit von Drehstellung des Schaltrads betätigt, wobei das Exzentergetriebe ein außenverzahntes Innenrad und ein damit in Kämmeingriff stehendes innenverzahntes Außenrad (24) aufweist, wobei das Schaltrad für eine Taumelbewegung bezüglich einer von dem Motor angetriebenen Welle (18) gelagert ist, deren Bewegung fest mit der Bewegung des verstellbaren Fahrzeugteils gekoppelt ist und die in einem Getriebegehäuse (26) drehbar gelagert ist, wobei das Schaltrad entweder das Innenrad oder das Außenrad des Exzentergetriebes bildet und wobei das Außenrad, das Schaltrad und die Schalteinheit innerhalb des Getriebegehäuses angeordnet sind. Das Schaltrad (14) und die Schalteinheit (12) sind zum berührungfreien Betätigen der Schalteinheit ausgebildet.

## Beschreibung

Die vorliegende Erfindung betrifft eine Steuervorrichtung für einen Elektromotor für ein verstellbares Fahrzeugteil gemäß dem Oberbegriff von Anspruch 1, wobei es sich bei dem verstellbaren Fahrzeugteil vorzugsweise um einen Deckel oder eine entsprechende Komponente eines öffnungsfähigen Fahrzeugdaches handelt.

Eine solche gattungsgemäße Steuervorrichtung ist aus DE 42 09 652 C1 bekannt, wobei die Welle drehfest mit einem Schneckenrad verbunden ist, welches von einer Schneckenwelle angetrieben wird und welches mit einer exzentrischen Ausnehmung versehen ist, in welcher das Schaltrad bezüglich des Schneckenrads und somit der Welle drehbar gelagert ist. Das Schaltrad bildet das innenverzahnte Außenrad des Exzentergetriebes. Das außenverzahnte Innenrad des Exzentergetriebes ist an dem Gehäusedeckel ausgebildet. Die Schalteinheit ist als Schalter mit einem Betätigungsstößel ausgebildet, welcher an dem Außenumfang des Schaltrads anliegt, um den Schalter in Abhängigkeit von der Drehstellung des Schaltrads zu betätigen. Der Außenumfang des Schaltrads ist dabei grundsätzlich wellenförmig ausgebildet, um die Taumelbewegung des Schaltrads zu kompensieren. In einem bestimmten Winkelbereich ist der Außenumfang mit einem Schaltnocken versehen, um mittels des Betätigungsstößels den Schalter der Schalteinheit zu betätigen.

Nachteilig bei dieser bekannten Steuervorrichtung ist, daß die Vorrichtung wegen des an dem Außenumfang des Schaltrads vorgesehenen Schalters in radialer Richtung einen relativ großen Raumbedarf hat und somit nicht besonders kompakt gebaut werden kann.

Aus DE 40 38 284 A1 ist eine Steuervorrichtung für einen Fensterheber bekannt, bei welcher eine drehfest mit dem Antriebsmotor des Fensterhebers verbundene Scheibe magnetisch codiert ist, so daß ihre Drehstellung von einem Hall-Element erfaßt werden kann. Anstelle des Hall-Elements kann auch ein optoelektronisches, kapazitives, induktives oder ohmsches Abtastelement verwendet werden.

Aus DE 38 29 405 C2 ist eine Antriebsvorrichtung für ein Schiebedach bekannt, bei welcher ein Zahnrad mit einem Magnetring versehen ist, welches von einem Einzahn-Getriebe angetrieben wird, das seinerseits von einer von dem Motor angetriebenen Welle angetrieben wird. Der Magnetring umfaßt zwei gegenpolig magnetisierte Segmente und wird von einem Magnetsensor abgetastet, um die Stellung des von der von dem Motor angetriebenen Welle angetriebenen Schiebedeckels zu erfassen.

Es ist Aufgabe der vorliegenden Erfindung, eine Steuervorrichtung für einen Elektromotor für ein verstellbares Fahrzeugteil zu schaffen, welche möglichst kompakt und einfach aufgebaut ist.

Diese Aufgabe wird erfindungsgemäß gelöst durch eine Steuervorrichtung, wie sie in Anspruch 1 definiert ist.

Bei dieser erfindungsgemäßen Lösung ist vorteilhaft, daß die Steuervorrichtung einerseits mit möglichst wenig Teilen auskommt und andererseits der erforderliche Bauraum klein gehalten werden kann.

In weiterer vorteilhafter Ausgestaltung ist das Außenrad an dem Getriebegehäuse ausgebildet und das Innenrad wird von dem Schaltrad gebildet. Dies erleichtert eine kompakte und stabile Bauweise.

Vorzugsweise sind das Schaltrad und die Schalteinheit zum induktiven Betätigen der Schalteinheit ausgebildet, wobei das Schaltrad vorzugsweise eine in Umfangsrichtung wechselnde Magnetisierung aufweist und die Schalteinheit einen Hall-Sensor aufweist, der die Magnetisierung des Schaltrads erfaßt.

Vorzugsweise umfaßt die Schalteinheit eine Steuerelektronik, die auf einer Platine implementiert ist, welche auch den Hall-Sensor trägt und im wesentlichen parallel zu dem Schaltrad liegt. Dies ermöglicht eine besonders kompakte Ausbildung der Steuervorrichtung.

In bevorzugter Ausgestaltung weist die Welle einen exzentrischen Abschnitt auf, bezüglich welchem das Schaltrad drehbar ist. Die Welle wird vorzugsweise über ein Untersetzungsgetriebe angetrieben, das von einer mit dem Motor verbundenen Schneckenwelle und einem mit dieser in Kämmeingriff stehenden Schneckenrad gebildet wird, das fest auf der Welle sitzt. Dabei ist der exzentrische Abschnitt vorzugsweise einstückig mit dem Schneckenrad ausgebildet, wobei der exzentrische Abschnitt an das Schneckenrad angespritzt sein kann. Auf diese Weise kann die Anzahl der erforderlichen mechanischen Teile minimal gehalten werden.

Vorzugsweise ist das Außenrad an der Innenseite eines Deckelabschnitts des Getriebegehäuses ausgebildet.

Im folgenden werden mehrere Ausführungsformen der Erfindung anhand der beiliegenden Zeichnungen beispielhaft näher erläutert. Dabei zeigen:
Fig. 1 eine Schnittansicht des Exzentergetriebes einer erfindungsgemäßen Steuervorrichtung;
Fig. 2 eine erste Ausführungsform des Schaltrads von Fig. 1;
Fig. 3 eine zweite Ausführungsform des Schaltrads von Fig. 1; und
Fig. 4 eine dritte Ausführungsform des Schaltrads von Fig. 1.

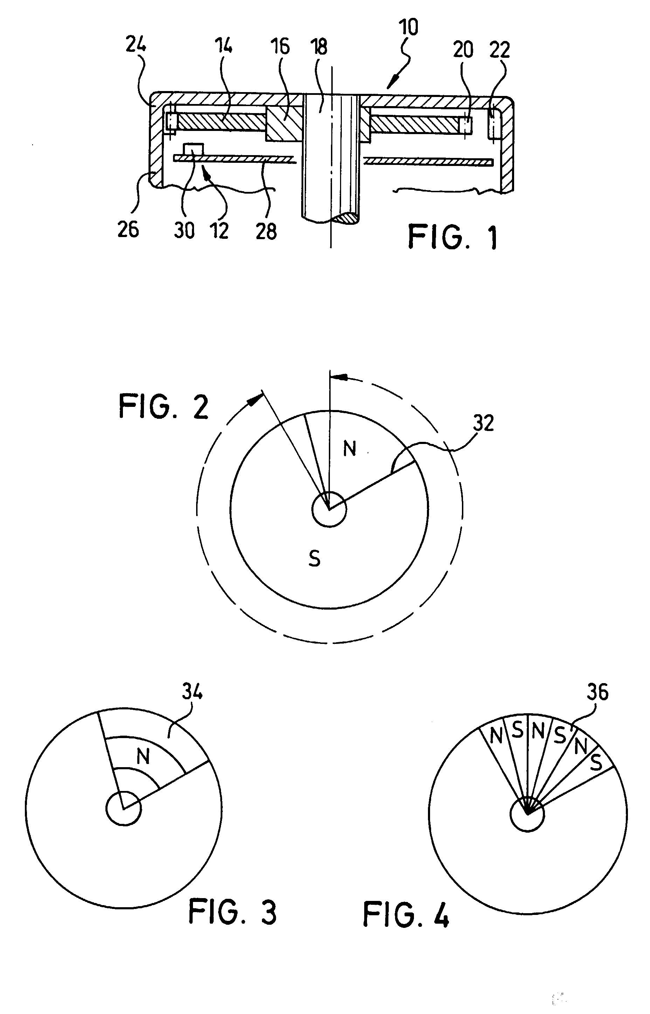

Fig. 1 zeigt eine Schnittansicht eines allgemein mit dem Bezugszeichen 10 bezeichneten Exzentergetriebes einer Steuervorrichtung für einen (nicht dargestellten) Elektromotor, der ein (nicht dargestelltes) zwischen Bezugsstellungen verstellbares Fahrzeugteil antreibt, sowie einer allgemein mit dem Bezugszeichen 12 bezeichneten Schalteinheit zum Steuern des Motors. Bei dem verstellbaren Fahrzeugteil handelt es sich vorzugsweise um einen Deckel eines Schiebedaches, Schiebe-Hebe-Daches oder Spoilerdaches, oder um ein in Dachlängsrichtung verschiebbares festes Dachelement eines Faltdaches oder Lamellendaches.

Die Schalteinheit 12 dient dazu, die Stellung des verstellbaren Fahrzeugteils absolut zu erfassen. Da sich die Motorwelle bzw. eine von der Motorwelle angetriebene Antriebswelle für das verstellbare Fahrzeugteil in der Regel beim Durchfahren des Verstellbereichs um mehr als 360° dreht, führt die Erfassung der Winkelstellung eines solchen Elements nicht zu einer eindeutigen Zuordnung bezüglich der Stellung des verstellbaren Fahrzeugteils. Um für ein rotierendes Element zu sorgen, welches sich über den gesamten Verstellbereich des verstellbaren Fahrzeugteils um weniger als 360° dreht, ist das Exzentergetriebe 10 vorgesehen. Bei dem Element, das sich um weniger als 360° dreht, handelt es sich um ein Schaltrad 14, welches auf einem exzentrischen Abschnitt 16 einer von dem Motor angetriebenen und drehbar in einem Deckelanschnitt 24 eines Getriebegehäuses 26 gelagerten Abtriebswelle 18 drehbar gelagert ist. Das Schaltrad 14 ist mit einer Außenverzahnung 20 versehen, welche in eine Innenverzahnung 22 eingreift. Die Innenverzahnung 22 ist an der Innenseite des Deckelabschnitts 24 des Getriebegehäuses 26 ausgebildet. Dieser Deckelabschnitt 24 mit der Innenverzahnung 22 bildet das innenverzahnte Außenrad des Exzentergetriebes 10, während das Schaltrad 14 das außenverzahnte Innenrad des Exzentergetriebes 10 bildet, wobei das Schaltrad 14 über den exzentrischen Abschnitt 16 der Welle 18 durch die Drehung der Welle 18 in dem Außenrad 24 umläuft und dabei eine taumelnde Bewegung ausführt.

Die Bewegung der Abtriebswelle 18 ist fest mit der Stellung des verstellbaren Fahrzeugteils gekoppelt, welches beispielsweise mittels eines drehfest auf der Abtriebswelle 18 sitzenden Ritzels, welches mit Antriebskabeln in Eingriff steht, angetrieben wird. Die Abtriebswelle 18 ihrerseits wird vorzugsweise über ein Untersetzungsgetriebe angetrieben, das von einer mit der Motorwelle drehfest verbundenen Schneckenwelle und einem mit dieser in Kämmeingriff stehenden Schneckenrad gebildet wird, das fest auf der Welle sitzt. Der exzentrische Abschnitt 16 kann dabei einstückig mit dem Schneckenrad ausgebildet sein, wobei der exzentrische Abschnitt an das Schneckenrad angespritzt sein kann.

Das Außenrad 24 bzw. 22, das Schaltrad 14 und die Schalteinheit 12 sind innerhalb des Getriebegehäuses 26 angeordnet, um Verschmutzung vorzubeugen.

Die Schalteinheit 12 wird von einer gehäusefest angebrachten Platine 28, welche parallel zu dem Schaltrad 14 verläuft und eine nicht näher dargestellte Steuerelektronik trägt, einem auf der Platine 28 fest angebrachten Hall-Sensor 30 sowie dem als Magnetrad ausgebildeten Schaltrad 14 gebildet. Das Schaltrad 14 ist mit in Umfangsrichtung wechselnder Magnetisierung ausgebildet, so daß der Hall-Sensor 30 die Drehstellung des Schaltrads 14 induktiv auf berührungsfreie Weise erfassen kann.

Zusätzlich zu der Schalteinheit 12 ist eine weitere Einrichtung zur Positionsbestimmung des verstellbaren Fahrzeugteils vorgesehen, welche vorliegend nicht dargestellt ist und aus einem drehfest mit der Abtriebswelle 18 oder der Motorwelle verbundenen Magnetrad bestehen kann, dessen Drehstellung von induktiven Sensoren erfaßt wird, wobei aus den erfaßten Pulssignalen mittels eines Zählers aus der Anzahl der Umdrehungen und der aktuellen Winkelstellung die Stellung des verstellbaren Fahrzeugteils bestimmt wird. Da dabei jedoch Zählfehler auftreten können, ist die Schalteinheit 12 vorgesehen, um als absolute Kalibrierung bzw. Überwachung des zusätzlichen Zählers zu dienen.

In Fig. 2 bis 4 sind verschiedene Ausführungsformen für das Schaltrad 14 dargestellt.

Gemäß der Ausführungsform von Fig. 2 besteht das Schaltrad im wesentlichen über seine gesamte Fläche aus magnetischem Material, wobei zwei Sektoren vorgesehen sind, die jeweils einheitlich N- bzw. S-polarisiert sind. In Fig. 2 ist mit unterbrochenen Linien der Winkelbereich dargestellt, über welchen sich das Schaltrad während einer Verstellung des verstellbaren Fahrzeugteils über den gesamten Verstellbereich dreht. Wenn der Hall-Sensor 30 den Magnetisierungswechsel an der mit dem Bezugszeichen 32 bezeichneten Magnetisierungsgrenze erfaßt, erkennt die Steuerelektronik, daß das verstellbare Fahrzeugteil beispielsweise noch fünf volle Umdrehungen der Abtriebswelle 18 und damit des zusätzlichen Schaltrads von der Schließstellung entfernt ist, wodurch die aktuelle Zählung der Umdrehungen des zusätzlichen Schaltrads überprüft und gegebenenfalls korrigiert werden kann. Dieses Prinzip gilt auch bei den anderen Ausführungsformen der Erfindung.

Bei der in Fig. 3 dargestellten Ausführungsform besteht das Schaltrad im wesentlichen aus Kunststoff, und weist nur in dem Sektor 34 magnetisches Material auf, welches einheitlich polarisiert ist. Auch hier erfaßt der Hall-Sensor 30 eine wechselnde Magnetisierung an den Grenzen des magnetischen Sektors 34 in Umfangsrichtung. Der Sektor 34 ist nur als Kreissegment ausgebildet, um magnetisches Material zu sparen. Auch bei der Ausführungsform gemäß Fig. 2 kann das magnetische Material in radialer Richtung auf einen Bereich beschränkt werden, der von der Position des Hall-Sensors 30 und der Exzentrizität der Taumelbewegung des Schaltrads 14 bestimmt ist.

Bei der Ausführungsform gemäß Fig. 4 ist ein magnetischer Sektor 36 vorgesehen, der jedoch im Gegensatz zu den Ausführungsformen gemäß Fig. 2 und Fig. 3 in Untersektoren mit abwechselnder Polarität unterteilt ist. Auf diese Weise können mehrfache Polarisationswechsel erfaßt werden, was die Möglichkeit eines Erfassens von Wegimpulsen bietet, so daß bei einer Messung des zurückgelegten Weges eines durch den Elektromotor bewegten Fahrzeugteils beispielsweise 100 Impulse einem zurückgelegten Verstellweg von 75 mm entsprechen.

Die vorliegende Erfindung ist nicht auf die Verwendung einer induktiven Betätigung der Schalteinheit 12 beschränkt, solange die Schalteinheit und das Schaltrad so ausgebildet sind, daß die Schalteinheit berührungsfrei betätigt werden kann. So ist z.B. auch eine optoelektronische Betätigung der Schalteinheit vorstellbar.

### Bezugszeichenliste

- Exzentergetriebe: **10**
- Schalteinheit: **12**
- Schaltrad: **14**
- exzentrischer Abschnitt auf 18: **16**
- Abtriebswelle: **18**
- Außennverzahnung von 14: **20**
- Innenverzahnung von 24: **22**
- Außenrad: **24**
- Getriebegehäuse: **26**
- Platine: **28**
- Hallsensor: **30**
- Magnetisierungsgrenze: **32**
- Segment: **34**
- Sektor: **36**

## Patentansprüche

1. Steuervorrichtung für einen Elektromotor, der ein zwischen Bezugsstellungen verstellbares Fahrzeugteil antreibt, mit einer Schalteinheit (12) zum Steuern des Motors, wobei ein Schaltrad (14) vorgesehen ist, das beim Verstellen des Fahrzeugteils zwischen seinen Endstellungen über ein Exzentergetriebe (10) zu einer Drehbewegung von weniger als 360 Grad veranlaßt wird und die Schalteinheit in Abhängigkeit von Drehstellung des Schaltrads betätigt, wobei das Exzentergetriebe ein außenverzahntes Innenrad und ein damit in Kämmeingriff stehendes innenverzahntes Außenrad (24) aufweist, wobei das Schaltrad für eine Taumelbewegung bezüglich einer von dem Motor angetriebenen Welle (18) gelagert ist, deren Bewegung fest mit der Bewegung des verstellbaren Fahrzeugteils gekoppelt ist und die in einem Getriebegehäuse (26) drehbar gelagert ist, wobei das Schaltrad entweder das Innenrad oder das Außenrad des Exzentergetriebes bildet und wobei das Außenrad, das Schaltrad und die Schalteinheit innerhalb des Getriebegehäuses angeordnet sind, **dadurch gekennzeichnet,** daß das Schaltrad (14) und die Schalteinheit (12) zum berührungfreien Betätigen der Schalteinheit ausgebildet sind.

2. Steuervorrichtung nach Anspruch 1, **dadurch gekennzeichnet,** daß das Außenrad (24) an dem Getriebegehäuse (26) ausgebildet ist und das Innenrad von dem Schaltrad (14) gebildet wird.

3. Steuervorrichtung nach Anspruch 1 oder 2, **dadurch gekennzeichnet,** daß das Schaltrad (14) und die Schalteinheit (12) zum induktiven Betätigen der Schalteinheit ausgebildet sind.

4. Steuervorrichtung nach Anspruch 3, **dadurch gekennzeichnet,** daß das Schaltrad (14) eine in Umfangsrichtung wechselnde Magnetisierung aufweist und die Schalteinheit (12) einen Hallsensor (30) umfaßt, der die Magnetisierung des Schaltrads erfaßt.

5. Steuervorrichtung nach Anspruch 4, **dadurch gekennzeichnet,** daß das Schaltrad (14) über im wesentlichen seine gesamte Fläche aus magnetischem Material besteht.

6. Steuervorrichtung nach Anspruch 5, **dadurch gekennzeichnet,** daß das Schaltrad (14) aus zwei Sektoren besteht, die jeweils einheitlich N- bzw. S-polarisiert sind.

7. Steuervorrichtung nach Anspruch 4, **dadurch gekennzeichnet,** daß das Schaltrad (14) nur in einem Sektor (34; 36) magnetisches Material aufweist.

8. Steuervorrichtung nach Anspruch 7, **dadurch gekennzeichnet,** daß das magnetische Material in dem Sektor (34) einheitlich polarisiert ist.

9. Steuervorrichtung nach Anspruch 7, **dadurch gekennzeichnet,** daß der Sektor (36) in Untersektoren mit abwechselnder Polarität unterteilt ist.

10. Steuervorrichtung nach Anspruch 4 oder einem darauf rückbezogenen Anspruch, **dadurch gekennzeichnet,** daß bei dem Schaltrad (14) magnetisches Material in radialer Richtung nur in einem Bereich (34) vorgesehen ist, der von der Hallsensorposition und der Exzentrizität der Taumelbewegung des Schaltrads bestimmt ist.

11. Steuervorrichtung nach Anspruch 4 bis 10, **dadurch gekennzeichnet,** daß die Schalteinheit (12) eine Steuerelektronik umfaßt, die auf einer Platine (28) implementiert ist, welche auch den Hallsensor (30) trägt und im wesentlichen parallel zu dem Schaltrad (14) liegt.

12. Steuervorrichtung nach einem der vorhergehenden Ansprüche, **dadurch gekennzeichnet,** daß die Welle (18) einen exzentrischen Abschnitt (16) aufweist, bezüglich welchem das Schaltrad (14) drehbar gelagert ist.

13. Steuervorrichtung nach Anspruch 12, **dadurch gekennzeichnet,** daß die Welle (18) über ein Untersetzungsgetriebe angetrieben wird, das von einer mit dem Motor verbundenen Schneckenwelle und einem mit dieser in Kämmeingriff stehenden Schneckenrad gebildet wird, das fest auf der Welle sitzt.

14. Steuervorrichtung nach Anspruch 13, **dadurch gekennzeichnet,** daß der exzentrische Abschnitt einstückig mit dem Schneckenrad ausgebildet ist.

15. Steuervorrichtung nach Anspruch 14, **dadurch gekennzeichnet,** daß der exzentrische Abschnitt an das Schneckenrad angespritzt ist.

16. Steuervorrichtung nach einem der vorhergehenden Ansprüche, sofern auf Anspruch 1 rückbezogen, **dadurch gekennzeichnet,** daß das Außenrad an der Innenseite eines Deckelabschnitts (24) des Getriebegehäuses (26) ausgebildet ist.
